# EUROPÄISCHE PATENTANMELDUNG

(11) **EP 1 946 916 A2**
(43) Veröffentlichungstag der Anmeldung: **23.07.2008**
(21) Anmeldenummer: 08000255.3
(22) Anmeldetag: 09.01.2008
(51) Int. Cl.: B30B 5/02, B29C 51/16, B27D 1/08

(54) **Heißpresse zur Beschichtung von Werkstücken, insbesondere Möbelteilen, sowie Arbeitstisch hierfür**

(30) Priorität: 20.01.2007 DE 102007002997
(71) Anmelder: Robert Bürkle GmbH, 72250 Freudenstadt (DE)
(72) Erfinder: Huber, Reinhard, 72250 Freudenstadt-Dietersweiler (DE)
(74) Vertreter: Kaiser, Magnus

(57) **Zusammenfassung**

Die Erfindung betrifft eine Heißpresse zur Beschichtung von Werkstücken mit einer Folie, insbesondere von Möbelteilen, an deren Oberseite und Seitenflächen nebst einem Arbeitstisch hierfür. Die Heißpresse umfasst einen Presstisch mit einem unteren Rahmen 8, eine relativ zum Presstisch verfahrbare Heizplatte 9 mit einem oberen Rahmen 6, Mittel zum Druckbeaufschlagen und/oder Evakuieren der durch die oberen und unteren Rahmen umschriebenen Volumina, sowie mindestens einen Werkstückträger 4 zum Auflegen eines zu beschichtenden Werkstücks 5. Die Erfindung kennzeichnet sich dadurch, dass innerhalb des unteren Rahmens 8 ein den Werkstückträger 4 zumindest teilweise umgebender Formrahmen 2 vorgesehen ist, der den Rand einer zumindest teilweise konvex oder im Wesentlichen zylindrisch gewölbten Fläche bildet.

## Beschreibung

Die Erfindung betrifft eine Heißpresse zur Beschichtung von Werkstücken mit einer Folie, insbesondere von Möbelteilen, an deren Oberseite und Seitenflächen nach dem Oberbegriff des Anspruchs 1. Die Erfindung betrifft weiterhin einen Arbeitstisch für eine solche Heißpresse nach dem Oberbegriff des Anspruchs 7.

Eine Heißpresse der vorliegenden Art umfasst einen Presstisch mit einem unteren Rahmen, eine relativ zum Presstisch verfahrbare Heizplatte mit einem oberen Rahmen, Mittel zum Druckbeaufschlagen und/oder Evakuieren der durch die oberen und unteren Rahmen umschriebenen Volumina, sowie mindestens einen Werkstückträger zum Auflegen des zu beschichtenden Werkstücks.

Insbesondere bei der Fertigung von Möbelteilen werden verbreitet Holzwerkstoffplatten aus Holzfasern oder Spänen verwendet, deren Oberflächen und Seitenflächen mit einer Folie beschichtet werden. Der Begriff Folie im Zusammenhang mit der vorliegenden Erfindung umfasst sowohl Kunststofffolien und dergleichen als auch Furniere, die als Folie auf eine Holzwerkstoffplatte aufgeleimt werden, um hochwertige Möbelplatten herzustellen.

Heißpressen der eingangs genannten Art werden vornehmlich zum Beschichten von dreidimensional profilierten Möbelteilen eingesetzt. Diese werden auf dem Presstisch auf den Werkstückträger aufgelegt, wobei der Werkstückträger eine kleinere Fläche aufweist, als das zu beschichtende Werkstück, so dass die Werkstückunterseite randseitig nirgends aufliegt. Danach wird die zur Beschichtung des Werkstücks vorgesehene Folie, den unteren Rahmen ganzflächig überdeckend, zwischen den oberen und unteren Rahmen eingebracht. Da die Beschichtung innerhalb eines - bei geschlossener Heißpresse - geschlossenen Rahmens stattfindet, dessen Innenraum mit Überdruck beaufschlagt und/oder evakuiert werden kann, wird die Folie mit Hilfe eines Druckunterschieds des oberhalb der Folie befindlichen Raums gegenüber dem unterhalb der Folie befindlichen Raum dreidimensional an das Werkstück angelegt, insbesondere um dessen Seitenflächen herum bis um deren untere Kante. Die oben angeordnete Heizplatte erwärmt die Folie im Wesentlichen durch Wärmestrahlung, so dass ein an der Folie anhaftender oder zuvor auf das Werkstück aufgebrachter Klebstoff aktiviert wird, und die Folie auf der Oberfläche sowie an den Seitenflächen des Werkstücks, deren Profil folgend, anhaftet.

In der Heißpresse der vorliegenden Erfindung ist in aller Regel mehr als lediglich ein Werkstückträger vorhanden, um mehrere Werkstücke gleichzeitig beschichten zu können. Die Heizplatte soll im Rahmen der Erfindung relativ zum Presstisch verfahrbar sein, was bedeutet, dass entweder die Heizplatte vertikal verfahrbar ist, oder der Presstisch nach oben gegen die Heizplatte gefahren werden kann. Gegebenenfalls sind sowohl der Presstisch als auch die Heizplatte vertikal verfahrbar. Der Druckunterschied zwischen dem oberhalb der Folie und dem unterhalb der Folie befindlichen Raum des geschlossenen Rahmens der Heißpresse kann durch Druckbeaufschlagen des oberen Raums oder, was bevorzugt ist, durch Evakuieren des unteren Raums, oder aber durch beides gleichzeitig erzeugt werden.

Beispiele für eine Heißpresse der vorliegenden Art sowie für einen entsprechenden Arbeitstisch finden sich im Stand der Technik beispielsweise in der EP 1 172 171 A1 oder in der DE 43 07 816 A1.

Wie erwähnt, legt sich die durch die Heizplatte erwärmte und hierdurch flexibel gewordene Folie auf die Oberfläche des Werkstücks sowie an dessen Seitenflächen auf, und zwar so, dass sie sich ein Stück weit hinter die Seitenflächen, um deren untere Kante herum, an den Rand der Rückseite des Werkstücks anlegt. Naturgemäß ist an dieser Stelle die Dehnung der Folie besonders hoch.

Werden nun Möbelteile beschichtet, die gewölbt ausgebildet sind, bilden schon die Seitenflächen für die Folie einen Hinterschnitt, so dass sich die Folie nur unter besonders hoher Dehnung um die untere Kante herum auf die Rückseite des Werkstücks auflegen kann. Ist das Werkstück nicht konvex gewölbt, sondern - wie beispielsweise zylindrisch ausgebauchte Türen von Badezimmerschränken - in Art einer Zylinder-Mantelfläche geformt, ergeben sich außerdem besonders hohe Dehnungen der Folie an den stirnseitigen Seitenflächen, da dort der Höhenunterschied zwischen der Mitte und den Seitenbereichen der Stirnflächen durch Dehnung der Folie ausgeglichen werden muss. Dies führt mitunter zu nicht befriedigenden Ergebnissen der Beschichtung.

Der vorliegenden Erfindung liegt daher die Aufgabe zugrunde, eine Heißpresse und einen Arbeitstisch der eingangs genannten Art für gewölbte Werkstücke zu optimieren.

Gelöst ist diese Aufgabe durch eine Heißpresse mit den Merkmalen des Anspruchs 1 sowie durch einen Arbeitstisch mit den Merkmalen des Anspruchs 7.

Bevorzugte Ausgestaltungen und Weiterbildungen der Erfindung ergeben sich aus den Ansprüchen 2 bis 6 sowie 8 bis 12.

Mit der vorliegenden Erfindung werden die an sich bekannte Heißpresse und der zugehörige Arbeitstisch also derart modifiziert, dass im unteren Rahmen bzw. im Rahmen des Arbeitstischs ein den Werkstückträger zumindest teilweise bzw. bereichsweise umgebender Formrahmen vorgesehen ist, der den Rand einer zumindest teilweise konvex oder im Wesentlichen zylindrisch gewölbten Fläche bildet. Da die Folie auf diesem Formrahmen aufliegt und vorzugsweise darauf gespannt wird, verläuft sie nicht parallel zum Presstisch und trifft dementsprechend bereits entlang einer gewölbten Fläche auf das gewölbte Werkstück auf, so dass sie - wie im Stand der Technik bei flachen Werkstücken - wiederum nur etwa um 90° umgelenkt werden muss, um auf die Seitenflächen des Werkstücks aufgelegt werden zu können. Die im Stand der Technik entstehende übermäßige Dehnung bei gewölbten Werkstücken wird hierdurch vermieden.

Die erfindungsgemäße Ausbildung des Formrahmens ist also einem Werkstück angepasst, das konvex oder im Wesentlichen zylindrisch gewölbt ist, oder aber auch nur teilweise konvex gewölbt sein kann, d. h. wellenförmig oder stufig oder dergleichen.

Besonders vorteilhaft ist es, wenn der Werkstückträger in entsprechender Weise gewölbt ausgebildet ist, um das gewölbte Werkstück an dessen Form angepasst zu unterstützen.

Besondere Vorteile bietet es darüber hinaus, wenn der Formrahmen eine Grundplatte aufweist, die vorzugsweise austauschbar ausgestaltet ist, so dass bedarfsweise eine dem jeweiligen Werkstück genau entsprechende gewölbte Form gewählt werden kann. Die gewölbte Grundplatte bildet mit dem erfindungsgemäß gewölbten Formrahmen und dem gewölbten Werkstück dann einen zu evakuierenden Raum unterhalb der Folie, der im Wesentlichen die Form einer Kugelschale, eines Ellipsoids oder dergleichen, oder eines Zylindersegments aufweist und dementsprechend der Projektion einer aus dem Stand der Technik bekannten Heißpresse auf eine gewölbte Fläche entspricht. Die Anforderungen an die Dehnbarkeit der Folie beim Aufbringen entsprechen daher den Anforderungen an die Folie bei Heißpressen nach dem Stand der Technik beim Beschichten von ebenen Werkstücken.

Die Austauschbarkeit der Grundplatte ermöglicht dabei die schnelle Anpassung der erfindungsgemäßen Heißpresse sowie des entsprechenden Arbeitstischs an unterschiedlich gewölbte Werkstücke. Die Wölbung des Formrahmens selbst muss nicht notwendigerweise verändert werden, kann jedoch ebenfalls veränderlich ausgestaltet sein. Der Formrahmen selbst ist vorzugsweise umlaufend ausgestaltet, was jedoch nicht zwingend ist. Insbesondere für zylindrisch gewölbte Werkstücke kann ein Formrahmen gewählt werden, der nur die Stirnseiten des Werkstücks umgibt.

Der untere Rahmen der erfindungsgemäßen Heißpresse kann als Palette ausgebildet sein oder auch in einer Palette angeordnet sein, wobei die Palette außerhalb der Heißpresse mit dem Werkstück und gegebenenfalls dem Werkstückträger sowie dem Formrahmen beschickt und zum Beschichten in die Heißpresse verbracht werden kann. Diese Technik ist ebenfalls an sich aus den eingangs genannten Schriften zum Stand der Technik bekannt.

Ein Ausführungsbeispiel der vorliegenden Erfindung wird im Folgenden anhand der beigefügten Zeichnungen näher beschrieben und erläutert. Es zeigen:
- Figur 1: einen erfindungsgemäß ausgestalteten Arbeitstisch in einer seitlichen Schnittdarstellung;
- Figur 2: den Arbeitstisch aus Figur 1 mit Folie beim Beschichten.
- Figur 3: den Kernbereich des Arbeitstischs aus Figur 1 in einer perspektivischen Ansicht

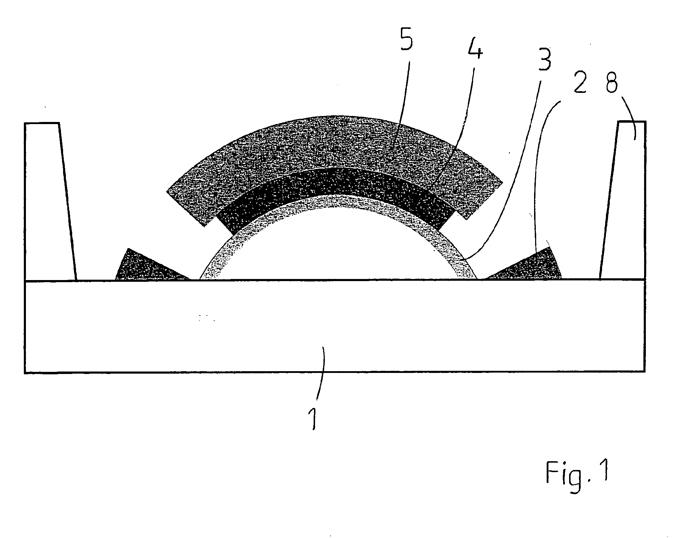

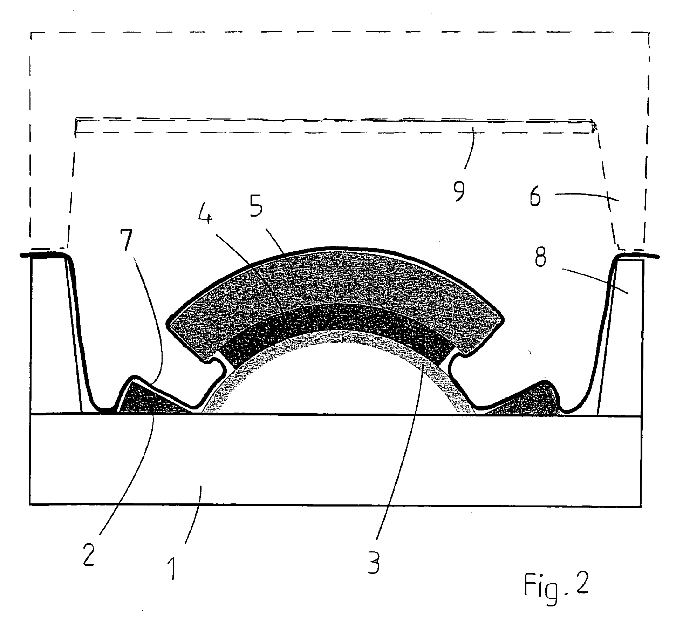

In Figur 1 ist in einer seitlichen Schnittdarstellung schematisch ein Arbeitstisch 1 einer im Übrigen nicht dargestellten Heißpresse gezeigt. Lediglich in Figur 2 sind mit durchbrochenen Linien weitere funktionswichtige Teile der Heißpresse angedeutet.

Der in Figur 1 dargestellte Arbeitstisch 1 ist als transportable Palette ausgestaltet und mit einem unteren Rahmen 8 der Heißpresse versehen. Auf dem Arbeitstisch 1 ist innerhalb des unteren Rahmens 8 ein zusätzlicher Formrahmen 2 angebracht, der erfindungsgemäß die Randbereiche einer gewölbten Fläche, im vorliegenden Beispiel einer Zylinderfläche bildet. Innerhalb des Formrahmens 2 befindet sich eine austauschbare Grundplatte 3 und auf dieser ein Werkstückträger 4, die beide in Form einer Zylinder-Mantelfäche gewölbt sind. Auf den Werkstückträger 4 ist ein gewölbtes Werkstück 5 aufgelegt, welches mit einer Folie beschichtet werden soll.

In Figur 2 ist gezeigt, wie sich eine Folie 7 beim Beschichten des Werkstücks 5 auf dieses auflegt. Mit durchbrochenen Linien ist lediglich angedeutet, wie der als Palette in die (ansonsten nicht dargestellte) Heißpresse eingebrachte Arbeitstisch 1, der mit einem unteren Rahmen 8 versehen ist, mit einem oberen Rahmen 6 und einer an diesem angebrachten Heizplatte 9 zusammenwirkt: Durch Absenken des oberen Rahmens 6 mit der Heizplatte 9 und/oder durch Anheben des Arbeitstischs 1 mit dem unteren Rahmen 8 wird die Heißpresse geschlossen und der Innenraum zwischen dem unteren Rahmen 8 und dem oberen Rahmen 6 luftdicht abgedichtet. Die zwischenliegende Folie 7 trennt den Innenraum zwischen dem oberen Rahmen 6 und dem unteren Rahmen 8 ebenfalls luftdicht in einen oberhalb der Folie 7 liegenden Raum und einen unterhalb der Folie 7 liegenden Raum. Durch insbesondere Wärmestrahlung von der Heizplatte 9, gegebenenfalls unterstützt durch ein aus dem Stand der Technik an sich bekanntes Ansaugen der Folie 7 an die Heizplatte 9 wird die Folie 7 mittels Erwärmung flexibel. Durch Einleiten eines leichten Überdrucks in den oberen Raum oder leichtes Vorevakuieren des unteren Raums legt sich die Folie 7 zunächst in Form einer Zylinder-Mantelfläche in kontinuierlicher Wölbung über den Formrahmen 2 und das Werkstück 5 auf und kann am Formrahmen 2 gespannt werden.

Durch anschließendes Evakuieren des zwischen der Folie 7 und dem unteren Rahmen 8 gebildeten Raums wird die Folie insbesondere zwischen dem Formrahmen 2 und dem Werkstück 5 nach unten gezogen sowie auf die Oberfläche des Werkstücks 5 aufgelegt. Da die Randbereiche des Werkstücks 5 über den Werkstückträger 4 hinausragen, wird die Folie 7 bis hinter die Unterkante der Seitenflächen des Werkstücks 5 gezogen sowie bis auf die Grundplatte 3 hinunter. Wie man anhand dieser Darstellung erkennt, ergeben sich hierdurch keine Umlenkungen der Folie 7, die im Stand der Technik bei ebenen Werkstücken nicht auch aufgetreten wären. Dies wird insbesondere durch die gewölbte Ausbildung des unteren Formrahmens 2 bewirkt und durch die bevorzugte Wölbung der Grundplatte 3 wirkungsvoll unterstützt. Wie anhand dieser Darstellung ferner klar wird, können auch flacher gewölbte Werkstücke 5 bei unverändertem Formrahmen 2, jedoch mit ausgetauschter Grundplatte 3 vorteilhaft mit einer Folie 7 beschichtet werden, so dass es ausreicht, eine Austauschbarkeit der Grundplatte 3 vorzusehen, um die erfindungsgemäße Heißpresse bzw. den erfindungsgemäßen Arbeitstisch 1 für unterschiedlich gewölbte Werkstücke 5 verwenden zu können.

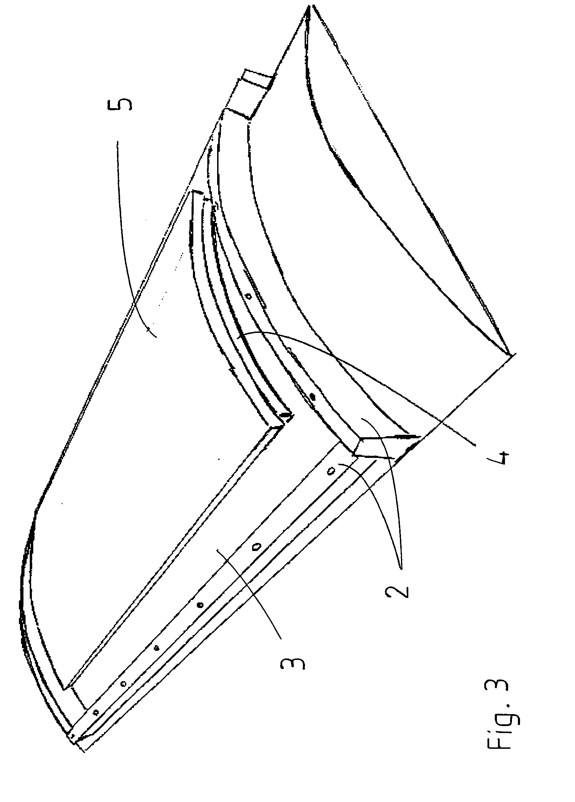

Figur 3 zeigt den Kernbereich des Arbeitstischs 1 aus Figur 1 in einer perspektivischen Ansicht, um die an das Werkstück 5 angepasste Formung des Formrahmens 2 besser verständlich zu machen. Das Werkstück 5 ist vorliegend zylindrisch gewölbt, so dass auch der Formrahmen 2 so ausgestaltet ist, dass er den Rand einer zylindrisch gewölbten Fläche bildet. Am auffälligsten ist dies an den Stirnseiten des Werkstücks 5, wo die Formung des Formrahmens 2 verhindert, dass die (hier nicht dargestellte) Folie, die auf das Werkstück 5 aufgelegt wird, stirnseitig übermäßig gelängt wird.

Die in Figur 3 dargestellte Grundplatte 3 ist ebenfalls dem Werkstück 5 angepasst und somit zylindrisch gewölbt. In dem hier dargestellten Beispiel ist der Formrahmen 2 auf der Grundplatte 3 befestigt, so dass er mit dieser zusammen eine austauschbare Einheit zur Unterstützung des Werkstückträgers 4 bildet. Wie oben beschrieben, kann jedoch der Formrahmen 2 auch separat von der Grundplatte 3 am Arbeitstisch 1 befestigt sein, so dass die Grundplatte 3 und der darauf befindliche Werkstückträger 4 unabhängig vom Formrahmen 2 ausgetauscht werden kann.

Abschließend sei bemerkt, dass eine erfindungsgemäße Heißpresse selbstverständlich auch mit mehreren Grundplatten 3, Formrahmen 2 und Werkstückträgern 4, wie sie in Figur 3 dargestellt sind, auf ein und demselben Arbeitstisch 1 nebeneinander angeordnet ausgerüstet sein kann, um in einem Arbeitsgang der Heißpresse gleichzeitig mehrere Werkstücke 5 beschichten zu können.

## Patentansprüche

1. Heißpresse zur Beschichtung von Werkstücken mit einer Folie, insbesondere von Möbelteilen, an deren Oberseite und Seitenflächen, umfassend einen Presstisch mit einem unteren Rahmen (8), eine relativ zum Presstisch verfahrbare Heizplatte (9) mit einem oberen Rahmen (6), Mittel zum Druckbeaufschlagen und/oder Evakuieren der durch die oberen und unteren Rahmen umschriebenen Volumina, sowie mindestens einen Werkstückträger (4) zum Auflegen eines zu beschichtenden Werkstücks (5),
**dadurch gekennzeichnet,**
**dass** innerhalb des unteren Rahmens (8) ein den Werkstückträger (4) zumindest teilweise umgebender Formrahmen (2) vorgesehen ist, der den Rand einer zumindest teilweise konvex oder im Wesentlichen zylindrisch gewölbten Fläche bildet.

2. Heißpresse nach Anspruch 1,
**dadurch gekennzeichnet,**
**dass** der untere Formrahmen (2) zum Spannen der zum Beschichten des Werkstücks (5) vorgesehenen Folie (7) dient.

3. Heißpresse nach einem der Ansprüche 1 oder 2,
**dadurch gekennzeichnet,**
**dass** der Werkstückträger (4) zum Auflegen des zu beschichtenden Werkstücks (5) zuminest teilweise konvex oder im Wesentlichen zylindrisch gewölbt ist.

4. Heißpresse nach mindestens einem der Ansprüche 1 bis 3,
**dadurch gekennzeichnet,**
**dass** innerhalb des unteren Rahmens (2) eine dem Werkstückträger (4) angepasste Grundplatte (3) vorgesehen ist.

5. Heißpresse nach Anspruch 4,
**dadurch gekennzeichnet,**
**dass** die Grundplatte (3) austauschbar ausgestaltet ist.

6. Heißpresse nach mindestens einem der Ansprüche 1 bis 5,
**dadurch gekennzeichnet,**
**dass** der untere Rahmen (8) als transportable Palette ausgebildet oder in einer Palette angeordnet ist.

7. Arbeitstisch für eine Heißpresse zur Beschichtung von Werkstücken mit einer Folie, insbesondere von Möbelteilen, an deren Oberseite und Seitenflächen, umfassend einen Rahmen (8) zum Auflegen und Spannen der Folie (7), einen Werkstückträger (4) sowie Mittel zum Evakuieren des unterhalb der Folie (7) im Rahmen (8) gebildeten Raumes,
**dadurch gekennzeichnet,**
**dass** innerhalb des Rahmens (8) ein den Werkstückträger (4) zumindest teilweise umgebender Formrahmen (2) vorgesehen ist, der den Rand einer zumindest teilweise konvex oder im Wesentlichen zylindrisch gewölbten Fläche bildet.

8. Arbeitstisch nach Anspruch 7,
**dadurch gekennzeichnet,**
**dass** der Formrahmen (2) zum Spannen der zum Beschichten des Werkstücks (5) vorgesehenen Folie (7) dient.

9. Arbeitstisch nach einem der Ansprüche 7 oder 8,
**dadurch gekennzeichnet,**
**dass** der Werkstückträger (4) zumindest teilweise konvex oder im Wesentlichen zylindrisch gewölbt ausgebildet ist.

10. Arbeitstisch nach mindestens einem der Ansprüche 7 bis 9,
**dadurch gekennzeichnet,**
**dass** innerhalb des Rahmens (2) eine dem Werkstückträger (4) angepasste Grundplatte (3) vorgesehen ist.

11. Arbeitstisch nach Anspruch 10,
**dadurch gekennzeichnet,**
**dass** die Grundplatte (3) austauschbar ausgestaltet ist.

12. Arbeitstisch nach mindestens einem der Ansprüche 7 bis 11,
**dadurch gekennzeichnet,**
**dass** der Arbeitstisch als transportable Palette ausgestaltet ist.
